Europäisches Patentamt

(19) European Patent Office

Office européen des brevets

(11) Numéro de publication: **0 010 020**
**B1**

(12) **FASCICULE DE BREVET EUROPEEN**

(21) Numéro de dépôt: **79400649.4**

(22) Date de dépôt: **17.09.79**

(51) Int. Cl.³: **C 09 K 11/465,**
**C 01 B 33/10**

(54) Fluosilicates de strontium hydratés luminescents, procédé pour leur préparation, leur application et procédé de production de lumière noire au moyen de ces composés

(30) Priorité: **03.10.78 FR 7828184**

(43) Date de publication de la demande:
**16.04.80 Bulletin 80/08**

(45) Mention de la délivrance du brevet:
**07.01.81 Bulletin 81/01**

(84) Etats contractants désignés:
**BE DE FR GB IT NL**

(56) Documents cités:
**FR - A - 2 340 361**
**GB - A - 1 087 655**

(73) Titulaire: **RHONE-POULENC INDUSTRIES**
**22, avenue Montaigne**
**F - 75008 Paris (FR)**

(72) Inventeur: **Dougier, Patrick**
**34, avenue de l'Europe**
**F - 78160 Marlyle-Roi (FR)**
**Fouassier, Claude**
**Résidence Saint-Géry 12, rue de la Chênaie**
**F - 33170 Gradignan (FR)**
**Latourrette, Bertrand**
**4, Square Xavier Monteny**
**F - 93220 Gagny (FR)**

(74) Mandataire: **Savina, Jacques, et al**
**RHONE POULENC Service Brevets Chimie et**
**Polymères B.P. 753**
**F - 75360 Paris Cedex 08 (FR)**

Courier Press, Leamington Spa, England.

**Fluosilicates de strontium hydratés luminescents, procédé pour leur préparation, leur application et procédé de production de lumière noire au moyen de ces composés**

La présente invention a pour objet des fluosilicates de strontium hydratés, activés à l'europium divalent, leur procédé de fabrication et leurs applications comme matériaux luminescents.

L'europium divalent est un activateur bien connu pour les corps luminescents et il produit généralement une large bande d'émission dans le visible ou dans le proche ultra-violet. Il a cependant déjà été proposé des composés activés à l'europium divalent qui emettent dans une bande étroite du proche ultra-violet; ainsi, l'US 3.630.945 décrit des fluoaluminates alcalino-terreux activés à l'europium divalent qui présentent un spectre de raies fines caractéristique de transitions 4f—4f; toutefois, ce spectre présente l'inconvénient de comporter un élargissement de la base du pic d'émission provenant de l'émission due aux transitions 5d—4f qui s'avère gênant dans les applications qui requièrent une répartition spectrale de l'émission très étroite.

Dans sa demande de brevet français n° 2.340.361, la demanderesse a proposé des nouveaux composés présentant une intensité de fluorescence élevée, sous forme d'une spectre de raies fines à répartition trés étroite dans le proche ultra-violet. Ces composés sont des fluosilicates alcalino-terreux anhydres activés à l'europium divalent et répondant à la formule générale $M_{1-x} Eu_x^{2+} Si F_6$ dans laquelle M représente un membre du groupe comprenant le strontium et le baryum et le mélange d'entre eux, et dans laquelle $0 < x \leqslant 0,2$.

Poursuivant ses recherches, la demanderesse a découvert de nouveaux matériaux luminescents qui, de façon surprenante, présentent une intensité de fluorescence sous forme d'un spectre de raies fines à répartition très étroite dans le proche ultra-violet encore plus importante que celle des composés décrits dans la demande de brevet français n° 2.340.361.

La présente invention concerne des fluosilicates de strontium hydratés luminescents répondant à la formule $Sr_{1-x} Eu_x Si F_6, 2 H_2O$ dans laquelle $0 < x \leqslant 0,5$.

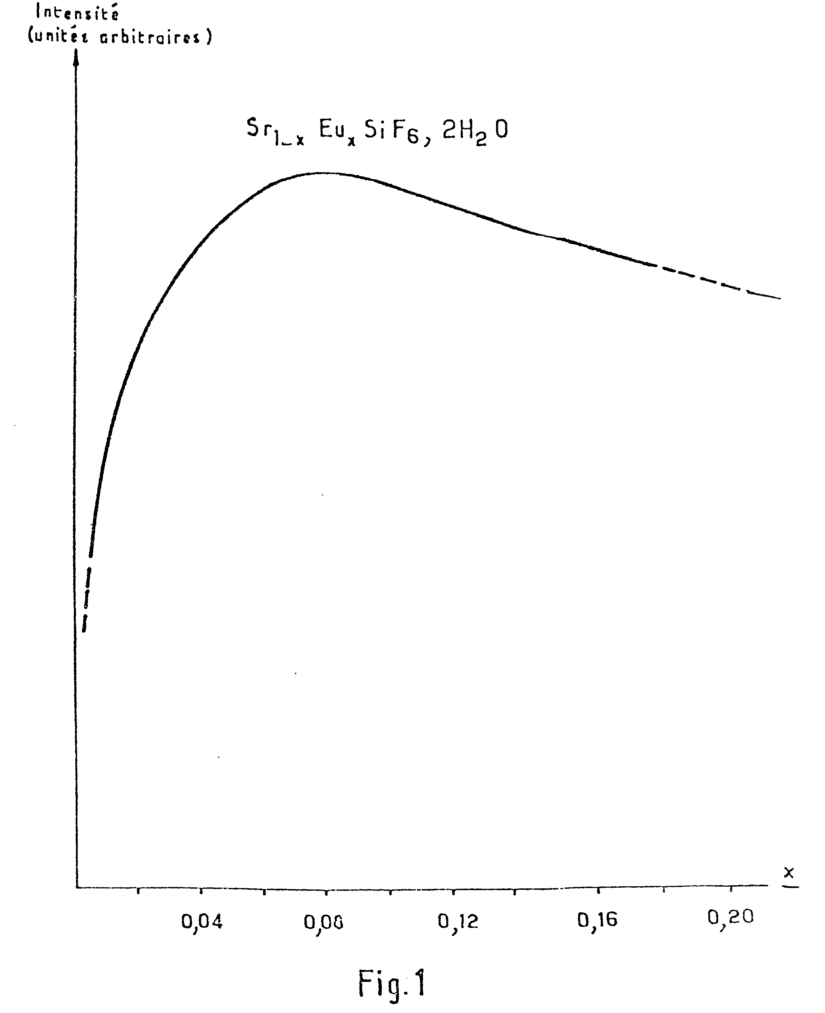

La proportion molaire x d'europium divalent dans les composés luminescents de la présente invention est comprise entre 0 (exclu) et 0,5 et, de préférence, comprise entre 0,04 et 0,16. Plus particulièrement, l'étude de l'influence de taux de substitution en europium divalent sur l'intensité d'émission montre que la valeur optimale de x est d'environ 0,08. La courbe de variation de l'intensité d'émission en fonction de x est reproduite à la figure 1.

Les matériaux luminescents de la présente invention dérivent des fluosilicates de strontium hydratés $Sr Si F_6, 2H_2O$ par substitution d'une partie des ions strontium par des ions europium divalent; les fluosilicates de strontium hydratés selon l'invention cristallisent dans le système orthorhombique avec les paramètres $a = 6,75$ Å, $b = 7,95$ Å, $c = 10,80$ Å et le groupe d'espace Pnma.

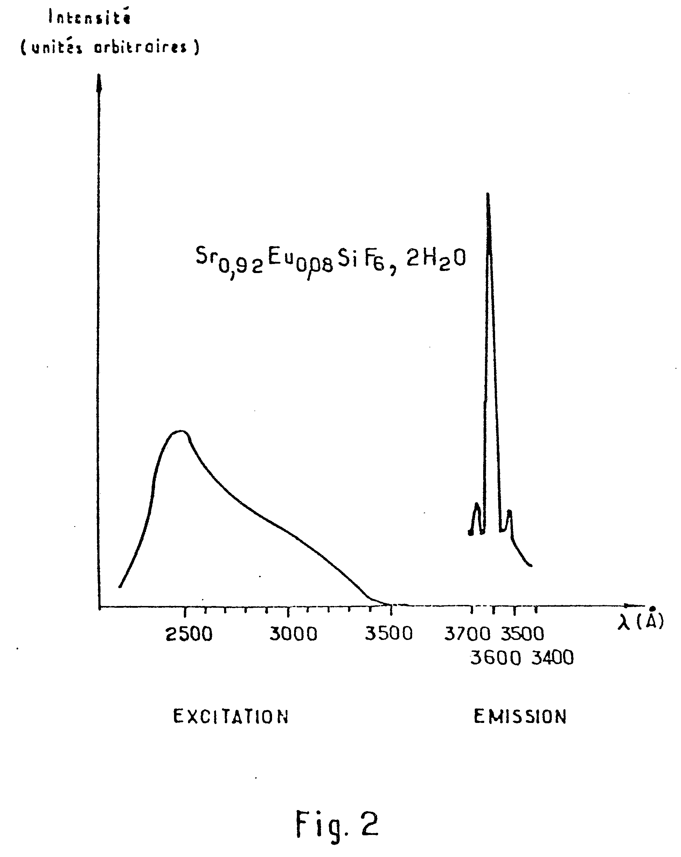

Les matériaux luminescents de l'invention ont une intensité de fluorescence très élevée sous excitation par un rayonnement ultra-violet. Le spectre d'excitation, donné à la figure 2, montre que la longueur d'onde du rayonnement d'excitation peut être choisie entre 2200 Å et 3400 Å, et, de préférence, au voisinage de 2537 Å.

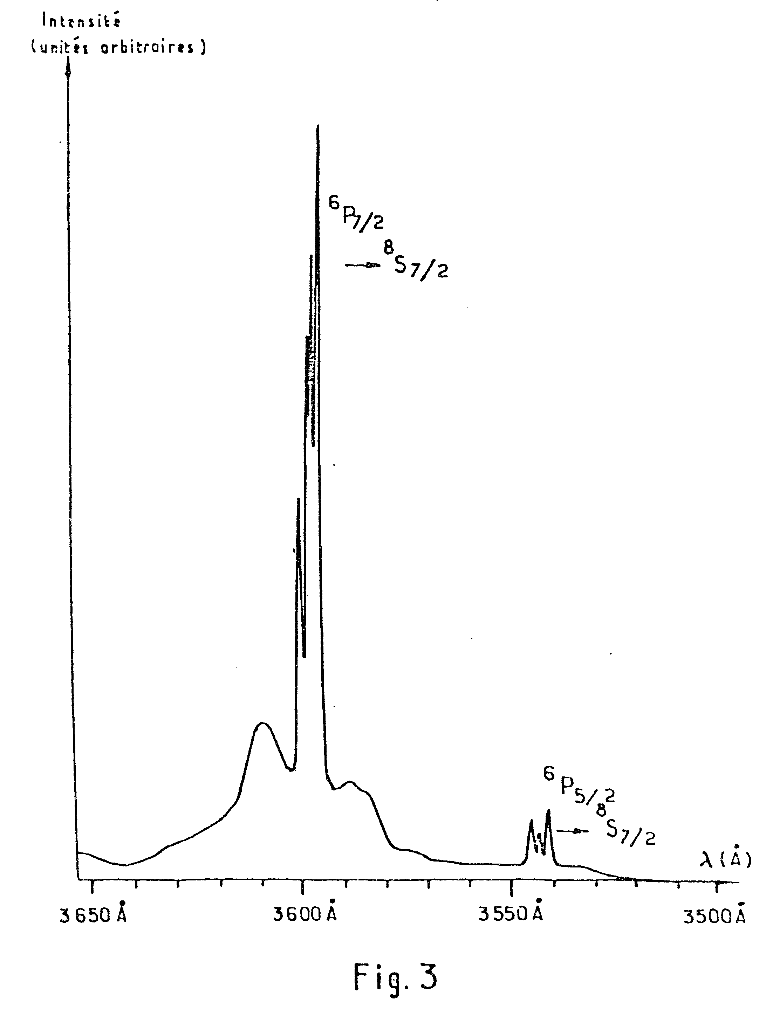

Le spectre d'émission des matériaux de l'invention est donné à la figure 2. Il se présente sous forme d'une spectre à répartition spectrale très étroite (3500 Å—3700 Å) constitué de raies fines dont la plus intense est centrée aux environs de 3600 Å. L'analyse de cette raie à l'aide d'un monochromateur de haute résolution montre qu'elle comporte en fait quatre composantes, associées aux transitions issues du premier niveau excité $^6P_{7/2}$ de la configuration $4f^7$ de l'europium divalent; leurs maximums se situent aux environs de 3594 Å, 3595 Å, 3597 Å, 3599 Å (figure 3); elles sont légèrement décalées vers les grandes longueurs d'onde par rapport à celles des matériaux décrits dans la demande de brevet français n° 2.340.361. Le spectre de la figure 3 met également en évidence une émission moins intense associée aux transitions issues du niveau $^6P_{5/2}$ de l'europium divalent.

L'excitation s'effectue par absorption du rayonnement U.V. incident par la bande $4f^6 5d^1$ suivie d'un transfert, non radiatif, suir les niveaux $^6P_J$ situés, pour les matériaux de l'invention, légèrement en-dessous de $4f^6 5d^1$.

Les matériaux luminescents de l'invention peuvent être préparés selon les méthodes classiques de préparation des fluosilicates et, en particulier, par réaction entre une solution d'acide hexa-fluosilicique $H_2 Si F_6$ et des solutions hydroalcooliques de composés du strontium et de l'europium divalent.

A cet effet, selon un mode de mise en oeuvre particulier du procédé selon l'invention:

on prépare une solution aqueuse d'un composé de l'europium tel que ses oxydes, ses sels (nitrates, hydroxydes, carbonates, halogénures);

on prépare une solution aqueuse d'un composé du strontium tel que ses sels (carbonates, hydroxydes, nitrates, halogénures), son oxyde;

on mélange les 2 solutions;

on ajoute au mélange aqueux ainsi formé un volume d'alcool, de préférence équivalent à celui de la solution aqueuse;

on fait passer la solution hydroalcoolique ainsi réalisée sur une colonne de Jones de manière à effectuer ou à parfaire la réduction de l'europium à l'état divalent;

on précipite la solution issue de la colonne de Jones par la quantité d'$H_2 Si F_6$ correspondant à, au moins, la stoechiométrie et, de préférence, en excès d'environ 65%;

on filtre et on sèche le précipité obtenu à l'aide d'un solvant organique comme l'éther à une température inférieure à 80°C et, de préférence, à température ambiante.

Selon une variante du procédé de préparation des matériaux de l'invention, on peut réaliser directement la solution hydroalcoolique en dissolvant un mélange d'une composé de l'europium et d'une composé du strontium choisi parmi les groupes précités dans un milieu hydroalcoolique.

Selon une seconde variante les matériaux de l'invention peuvent être préparés par précipitation par un alcool d'une solution aqueuse d'acide hexafluorosilicique et de composés du strontium et de l'europium divalent.

Les fluosilicates de strontium hydratés activés à l'europium divalent qui font l'objet de l'invention sont utilisables dans tous des dispositifs utilisant la production de lumière noire et spécialement dans les domaines d'applications qui nécessitent une émission intense à environ 3600 Å qui correspond à la lumière noire; en particulier, ils sont applicables dans les lampes à décharges pour produire de la lumière noire.

Parmi les domaines d'application de la lumière noire, on peut citer celui de la reproduction photochimique de documents. La copie de tels documents s'obtient en exposant le document original à un rayonnement dont la longueur d'onde correspond au maximum de sensibilité du papier et en captant les rayons réfléchis ou transmis sur le papier photosensible.

Les matériaux luminescents de l'invention s'avèrent particulièrement adaptés à l'application décrite ci-dessus car ils comportent un spectre d'émission étroit dans lequel pratiquement toute l'énergie de luminescence est émise dans le domaine de sensibilité maximale des papiers photosensibles.

D'autres applications de la lumière noire peuvent également être envisagées dans le cadre de l'invention. On peut citer en minéralogie les applications à la prospection du pétrole, de l'uranium, à la détection du mercure, à la luminescence des pierres précieuses; en médecine, les applications à l'examen des ongles, cheveux, dents, yeux et de la peau et aux systèmes nerveux et circulatoire, aux fonctions rénales, à la chirurgie, au bronzage; en agronomie, pour le traitement des plantes. Dans les domaines du contrôle et de la détection, on peut également citer l'application au contrôle des soudures et des états de surfaces au contrôle des produits alimentaires, des fibres textiles, à la détection des marquages invisibles, au tri-postal, à la philatélie, aux contrôles des signatures, recherches des falsifications, criminologie, au marquage confidentiel des documents; dans la décoration et l'affichage à l'obtention d'effets spéciaux; dans la recherche scientifique, à la microscopie, chromatographie, spectrophotométrie, électrophorèse.

La présente invention va maintenant être illustrée en donnant des exemples de préparation des matériaux luminescents ainsi que leurs spectres d'émission.

Exemple 1

On a préparé le composé répondant à la formule $Sr_{1-x} Eu_x Si F_6, 2H_2O$ pour la valeur de x égale à 0,08 qui correspond à l'intensité de fluorescence maximum des fluosilicates de strontium hydratés, activés à l'europium divalent de l'invention:

On a utilisé les produits de départ suivants dans les proportions indiquées:

| Composés de départ | Quantités mises en oeuvre |
|---|---|
| $Sr Cl_2, 6 H_2O$ | 245,29 g |
| $Eu_2 O_3$ préalablement calciné 3—4 h à 900—1000°C | 14,08 g |
| $H_2 Si F_6$ 31% (d=1,29) | 550 cm³ |

On a opéré de la manière décrite ci-dessous:

— on a dissous l'oxyde d'europium trivalent à l'aide de 70 cm³ d'HCl concentré en chauffant légèrement (solution 1);

— on a dissous le chlorure de strontium dans le minimum d'eau distillée en chauffant légèrement (solution 2);

— on a versé la solution 1 dans la solution 2 et obtenu un volume voisin de 500 cm³, auquel on ajoute 500 cm³ d'alcool éthylique (solution hydroalcoolique 3);

— on dispose d'une colonne contenant un amalgame zinc-mercure munie d'une réserve de 1 l (colonne de Jones). Celle-ci est soigneusement rincée à l'eau et un minimum d'eau est laissé au-

3

**0010020**

dessus de l'amalgame. On transvase la solution hydroalcoolique 3 dans la colonne pour réduire l'europium à l'état divalent;
— on prélève en bas de la colonne les premiers 50 cm³ constituant le volume mort (préalablement déterminé) de la colonne;
— la solution tombe ensuite dans un flacon en manolène contenant l'$H_2 Si F_6$ placé sous la colonne et convenablement agité.

Pendant toute la durée de l'écoulement, on assure un balayage de gaz neutre (Ar) à la sortie de la colonne, de manière à prévenir toute réoxydation de l'europium divalent.

La réserve de la colonne est ensuite soigneusement rincée avec un mélange eau-alcool 50/50 (environ 60 cm³) avant d'évacuer de la colonne le reste de la solution avec 70 cm³ d'alcool, de telle sorte que le pH ne soit plus acide au bas de la colonne.

L'agitation et la protection de gaz neutre sont maintenues pendant toute la durée de l'écoulement et poursuivies un certain temps après la précipitation du fluosilicate.

On obtient 266 g d'un précipité blanc qui est filtré puis rincé à l'alcool éthylique absolu, et enfin séché à l'éther.

L'analyse radiocristallographique du produit obtenu permet de la caractériser. Il cristallise dans le système orthorhombique avec les paramètres $a = 6,75$ Å, $b = 7,95$ Å, $c = 10,80$ Å et le groupe d'espace Pnma.

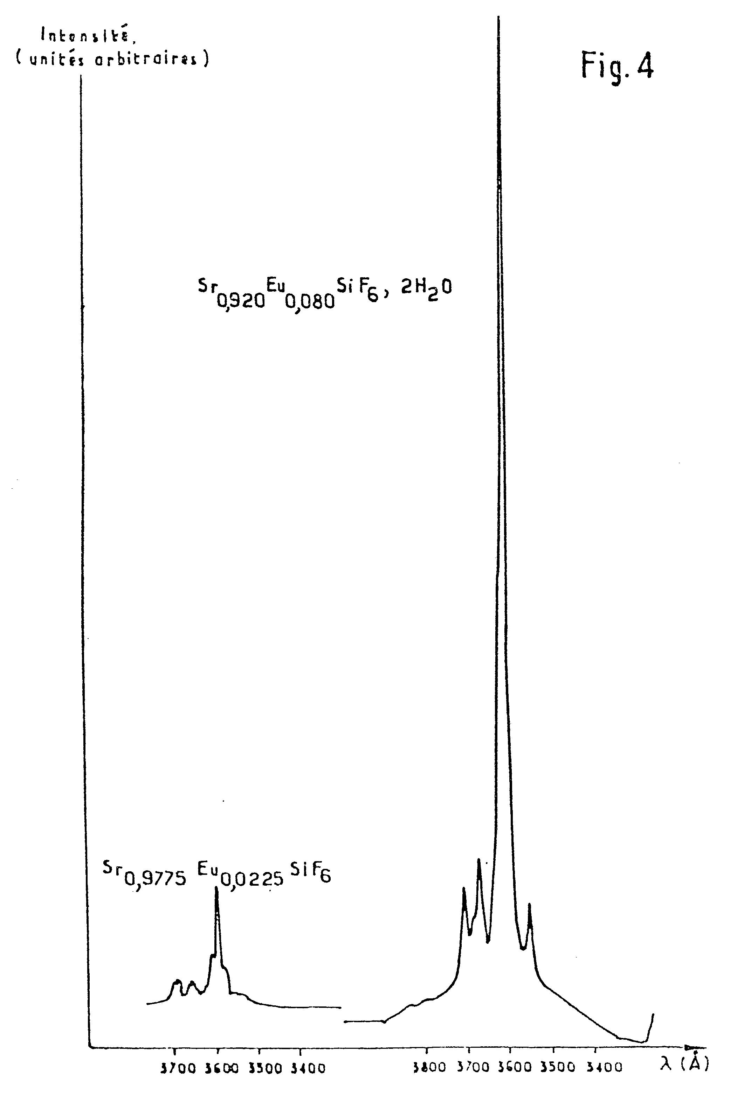

Le fluosilicate ainsi préparé présente à température ambiante, sous excitation ultra-violette à $\lambda = 2537$ Å par une lampe au deutérium ayant une puissance de 100 w, une émission de raie située vers 3600 Å. A titre comparatif, les fluosilicates alcalino-terreux anhydres ayant fait l'objet de la demande française n° 2.340.361 présentent un spectre de raie dont le maximum se situe vers 3580 Å. La comparaison des spectres d'émission de $Sr_{0,92} Eu_{0,08} Si F_6, 2H_2O$ et $Sr_{0,9775} Eu_{0,0225} Si F_6$, donnés à la figure 4, montre que les composés de la présente invention ont une émission beaucoup plus intense (8 à 9 fois) que celle des composés de l'Art antérieur dans les mêmes conditions d'excitation.

Exemple 2

On a préparé le même composé que celui décrit dans l'Exemple 1 mais en utilisant les composés de départ suivants dans les proportions indiquées:

| Composés de départ | Quantités mises en oeuvre |
|---|---|
| $Sr CO_3$ | 135,82 g |
| $Eu_2O_3$ préalablement calciné 3—4 h à 300—1000°C | 14,08 g |
| $H_2 Si F_6$ 31% (d=1,29) | 550 cm³ |

On a utilisé une méthode de préparation identique à celle de l'Exemple 1 mais en dissolvant le carbonate de strontium dans le volume nécessaire d'acide chlorhydrique concentré.

Le matériau luminescent ainsi obtenu est identique à celui de l'Exemple 1.

En particulier il se caractérise par les mêmes données radiocristallographiques; son spectre de diffraction X est donné ci-dessous.

4

| Spectre de diffraction X de $Sr_{0,92}$ $Eu_{0,08}$ $SiF_6$, $2H_2O$ | | | | | |
|---|---|---|---|---|---|
| d (A°) | I* | d (A°) | I* | d (A°) | I* |
| 6,46 | F | 2,86 | f | 2,06 | f |
| 5,79 | f | 2,69 | f f | 2,034 | mF |
| 5,45 | m | 2,55 | mF | 2,028 | m |
| 4,67 | f f | 2,49 | f f | 2,00 | m |
| 4,23 | F F | 2,47 | m | 1,99 | m |
| 3.97 | F | 2.39 | m | 1,98 | mF |
| 3,37 | m F | 2,34 | m F | 1,92 | f f |
| 3,27 | f | 2,31 | m F | 1,86 | m F |
| 3,26 | f | 2,22 | m F | 1,85 | m F |
| 3,21 | f | 2,20 | m | 1,83 | m F |
| 3,20 | f | 2,12 | m | | f f |
| 3,11 | f f | 2,11 | m | | f |
| 2,98 | m F | 2,10 | m | 1,80 | m |
| 2,94 | m F | 2,08 | m F | 1,79 | m F |
| 2,88 | m F | 2,07 | m F | 1,77 | m F |

F = fort  m F = moyennement fort  m = moyen  f = faible  f f = tres faible

**Revendications**

1. Fluosilicates de strontium hydratés luminescents répondant à la formule $Sr_{1-x}$ $Eu_x$ $Si F_6$, $2 H_2O$ dans laquelle; $0 < x \leqslant 0,5$.

2. Fluosilicates de strontium hydratés luminescent selon la revendication 1, caractérisés en ce que $0,04 \leqslant x \leqslant 0,16$.

3. Fluosilicate de strontium hydraté luminescent selon la revendication 2, caractérisé en ce que $x = 0,08$.

4. Procédé de préparation des fluosilicates de strontium hydratés luminescents selon l'une quelconque des revendications précédentes par réaction entre $H_2 Si F_6$ et des solutions hydroalcooliques de composés du strontium et de l'europium divalent.

5. Procédé selon la revendication 4, caractérisé en ce qu'il comporte les étapes suivantes:

— préparation d'une solution aqueuse d'un composé de l'europium pris dans le groupe comportant ses oxydes, ses nitrates, hydroxydes, carbonates, halogénures;
— préparation d'une solution aqueuse d'un composé du strontium pris dans le groupe comportant ses carbonates, hydroxydes, nitrates, halogénures, son oxyde;
— mélange de ces deux solutions, puis ajout d'une volume d'alcool équivalent à celui de la solution aqueuse;
— passage de la solution hydroalcoolique ainsi réalisée sur une colonne de Jones;
— précipitation de la solution issue de la colonne de Jones par une quantité d'$H_2 Si F_6$ correspondant à, au moins, la stoechiométrie, filtration et séchage du précipité obtenu.

6. Procédé selon la revendication 5, caractérisé en ce que l'on prépare directement une solution hydroalcoolique en dissolvant un mélange d'un composé de l'europium et du composé du strontium dans un milieu hydroalcoolique.

7. Procédé de préparation de fluosilicates selon l'une quelconque des revendications 1, 2, 3 par précipitation par un alcool d'une solution aqueuse d'acide hexafluorosilicique et de composés du strontium et de l'europium divalent.

8. Application des fluosilicates de strontium hydratés luminescents selon l'une quelconque des revendications 1, 2, 3 dans les dispositifs utilisant la production de lumière noire.

9. Procédé de production de lumière noire par irradiation par une radiation ultra-violette de longueur d'onde comprise entre 2200 et 3400 Å d'un fluosilicate selon l'une quelconque des revendications 1, 2, 3.

## Claims

1. Luminescent hydrated strontium fluosilicates corresponding to the formula $Sr_{1-x}Eu_xSiF_6 \cdot 2H_2O$ in which: $0 < x \leqslant 0.5$.

2. Luminescent hydrated strontium fluosilicates according to Claim 1, characterised in that $0.04 \leqslant x \leqslant 0.16$.

3. Luminescent hydrated strontium fluosilicate according to Claim 2, characterised in that $x = 0.08$.

4. Process for the preparation of the luminescent hydrated strontium fluosilicates according to any one of the preceding claims, by reacting $H_2SiF_6$ with aqueous-alcoholic solutions of compounds of strontium and divalent europium.

5. Process according to Claim 4, characterised in that it comprises the following steps:

preparing an aqueous solution of a europium compound taken from the group comprising its oxides, nitrates, hydroxides, carbonates and halides;

preparing an aqueous solution of a strontium compound taken from the group comprising its carbonates, hydroxides, nitrates, halides and its oxide;

mixing these two solutions and then adding a volume of alcohol which is equivalent to the volume of the aqueous solution;

passing the aqueous-alcoholic solution produced in this way through a Jones' column; and

causing precipitation in the solution leaving the Jones' column, by means of an amount of $H_2SiF_6$ which at least corresponds to the stoichiometric amount, and filtering off and drying the resulting precipitate.

6. Process according to Claim 5, characterised in that an aqueous-alcoholic solution is prepared directly by dissolving a mixture of a europium compound and the strontium compound in an aqueous-alcoholic medium.

7. Process for the preparation of fluosilicates according to any one of Claims 1, 2 and 3 by causing a precipitate to form in an aqueous solution of hexafluorosilicic acid and of compounds of strontium and divalent europium, by means of an alcohol.

8. Application of the luminescent hydrated strontium fluosilicates according to any one of Claims 1, 2 and 3 in devices utilising the production of dark light.

9. Process for the production of dark light by irradiating a fluosilicate according to any one of Claims 1, 2 and 3 with ultraviolet radiation having a wavelength of between 2,200 and 3,400 Å.

## Patentansprüche

1. Lumineszierende hydratisierte Strontiumfluorsilicate der Formel $Sr_{1-x}Eu_xSiF_6 \cdot 2H_2O$, in der $0 < x \leqslant 0,5$.

2. Lumineszierende hydratisierte Strontiumfluorsilicate nach Anspruch 1, dadurch gekennzeichnet, daß $0,04 \leqslant x \leqslant 0,16$.

3. Lumineszierende hydratisierte Strontiumfluorsilicate nach Anspruch 2, dadurch gekennzeichnet, daß $x = 0,08$.

4. Verfahren zur Herstellung von lumineszierenden hydratisierten Strontiumfluorsilicaten nach einem der vorstehenden Patentansprüche durch Reaktion zwischen $H_2SiF_6$ und wäßrigen alkohollösungen von Verbindungen von Strontium und zweiwertigem Europium.

5. Verfahren nach Anspruch 4, dadurch gekkennzeichnet, daß es die folgenden Stufen umfasst:
— Herstellung einer wäßrigen Lösung einer Verbindung von Europium, die aus der aus seinen Oxiden, seinen Nitraten, Hydroxiden, Carbonaten und Halogeniden bestehenden Gruppe ausgewählt ist;
— Herstellung einer wäßrigen Lösung einer Verbindung von Strontium, die aus der aus seinen Carbonaten, Hydroxiden, Nitraten, Halogeniden und seinem Oxid ausgewählt ist;
— Mischen dieser beiden Lösungen und dann Zugabe eines Alkoholvolumens, das dem der wäßrigen Lösung äquivalent ist;
— Aufgeben der in dieser Weise hergestellten wäßrig-alkoholischen Lösung auf eine Jones-Kolonne;
— Fällung der aus der Jones-Kolonne austretenden Lösung mit $H_2SiF_6$ in einer Menge, die wenigstens der stöchiometrischen Menge entspricht, Filtration und Trocknung der erhaltenen Fällung.

**0010020**

6. Verfahren nach Anspruch 5, dadurch gekennzeichnet, daß man direkt eine wäßrig-alkoholische Lösung durch Auflösen eines Gemisches einer Europiumverbindung und der Strontiumverbindung in einem wäßrig-alkoholischen Medium herstellt.

7. Verfahren zur Herstellung von Fluorsilicaten nach einem der Anspruch 1, 2 und 3 durch Fällung einer wäßrigen Lösung von Hexafluorkieselsäure und von Verbindungen des Strontiums und des zweiwertigen Europiums mit einem Alkohol.

8. Anwendung der lumineszierenden hydratisierten Strontiumfluorsilicate nach einem der Anspruch 1, 2 und 3 in Vorrichtungen, die die Erzeugung von Schwarzlicht ausnutzen.

9. Verfahren zur Erzeugung von Schwarzlicht durch Bestrahlen eines Fluorsilicats nach einem der Anspruch 1, 2 und 3 mit Ultraviolettstrahlung einer Wellenlänge zwischen 2200 und 3400 Å.

Fig.1

Fig. 2

0010020

Fig. 3

Fig. 4

0010020